# EUROPÄISCHE PATENTANMELDUNG

(11) **EP 4 686 856 A1**
(43) Veröffentlichungstag der Anmeldung: **04.02.2026**
(21) Anmeldenummer: 24191950.5
(22) Anmeldetag: 31.07.2024
(51) Int. Cl.: F16H 35/10, A01D 34/82

(54) **ANTRIEBSSTRANG, ANTRIEBSEINRICHTUNG UND LANDWIRTSCHAFTLICHE MASCHINE MIT SOLCHEN**

(71) Anmelder: Deere & Company, Moline, IL 61265 (US)
(72) Erfinder: Perez Ramirez, Javier, Mannheim (DE); Vergara Martinez, Daniel, Mannheim (DE); Torres, Juan Antonio, Mannheim (DE)
(74) Vertreter: Reichert, Christian

(57) **Zusammenfassung**

Ein Antriebsstrang (22, 24) für eine Antriebseinrichtung (20) ist offenbart. Der Antriebsstrang (22, 24), umfasst eine Eingangswelle (28), eine mit der Eingangswelle (28) in Antriebsverbindung stehende Hohlwelle (30, 32) und ein mit der Hohlwelle (30, 32) in Antriebsverbindung stehende Kegelradstufe (34, 36), wobei die Kegelradstufe (34, 36) ein Antriebskegelrad (42, 44) und ein Abtriebskegelrad (46, 48) umfasst, wobei das Antriebskegelrad (42, 44) eine Radnabe mit Innenverzahnung (92, 94) aufweist, welche mit einem sich axial an der Hohlwelle (30, 32) erstreckenden ersten Außenverzahnungsbereich (96, 98) im Eingriff steht. Der erste Außenverzahnungsbereich (96, 98) ist auf einem ersten Verbindungsbereich (102, 106) der Hohlwelle (30, 32) ausgebildet. Axial angrenzend zum ersten Verbindungsbereich (102, 106) erstreckt sich ein Drehübertragungsbereich (100, 101) der Hohlwelle (30, 32), wobei der Drehübertragungsbereich (100, 101) eine drehfeste Antriebsverbindung zwischen Eingangswelle (28) und dem ersten Verbindungsbereich (102, 106) bildet und wobei der erste Verbindungsbereich (102, 106) zwischen dem Drehübertragungsbereich (100, 101) und dem Außenverzahnungsbereich (96, 98) mit einer eine Sollbruchstelle vorgebenden ersten Aussparung (114, 118) versehen ist. Ferner ist eine Antriebseinrichtung (20) mit einem solchen Antriebsstrang (22, 24) und eine landwirtschaftliche Maschine mit einer solchen Antriebseinrichtung (20) offenbart.

## Beschreibung

Die Erfindung betrifft einen Antriebsstrang für eine Antriebseinrichtung, umfassend eine Eingangswelle, eine mit der Eingangswelle in Antriebsverbindung stehende Hohlwelle und ein mit der Hohlwelle in Antriebsverbindung stehende Kegelradstufe, wobei die Kegelradstufe ein Antriebskegelrad und ein Abtriebskegelrad umfasst, wobei das Antriebskegelrad eine Radnabe mit Innenverzahnung aufweist, welche mit einem an der Hohlwelle ausgebildeten ersten Außenverzahnungsbereich radial im Eingriff steht. Die Erfindung betrifft ferner eine Antriebseinrichtung mit einem solchen Antriebsstrang, sowie eine landwirtschaftliche Maschine mit wenigstens einer Bearbeitungseinrichtung zur Bearbeitung von Erntegut und einer solchen mit der wenigstens einen Bearbeitungseinrichtung verbundenen Antriebseinrichtung.

Im Stand der Technik sind landwirtschaftliche Maschinen, insbesondere Erntemaschinen mit Bearbeitungseinrichtungen für aufgenommenes Erntegut bekannt. Dazu gehören beispielsweise Mähdrescher, Feldhäcksler oder auch Zuckerrohrernter oder auch andere Erntemaschinen, die eine Bearbeitung für aufgenommenes Erntegut in der Maschine vorsehen. So kann im Erntegutfluss beim Ernten des Ernteguts eine Dreschbearbeitung, Häckselbearbeitung, Schneidbearbeitung oder eine andere Art von Bearbeitung vorgesehen sein, wobei für die Bearbeitungseinrichtung eine Antriebseinrichtung vorgesehen ist, welche zur Absicherung gegen eine Überlastung mit einem Überlastschutz versehen sein kann. Der Überlastschutz kann durch eine Torsionssicherung in Form von Scherbolzen, durch eine Rutschkupplung oder auch auf andere Arterfolgen. Die Einrichtung einer Rutschkupplung ist in der Regel ungünstig hinsichtlich eines komplexen Bauaufwands und Verschleißanfälligkeit. Eine Anordnung von Scherbolzen erfordert ebenfalls aufwändige Instandhaltungsarbeiten. Sollte es wegen einer Überlastung der Antriebseinrichtung zu einem Abscheren der Scherbolzen gekommen sein, ist generell eine Instandhaltung sehr aufwendig und erfordert in der Regel den Ausbau der Antriebseinrichtung und einen Austausch der Scherbolzen. Insbesondere der Ausbau der Antriebseinrichtung kann kostenintensiv und sehr zeitaufwändig sein.

Eine derartige Erntemaschine ist beispielsweise in der US 4,248,249 A offenbart. Dort wird ein Axialfluss-Mähdrescher mit einem Schneidvorsatz zum Schneiden und Zuführen von Erntegut beschrieben. Das Erntegut wird in Form von Schnittgut einem Dresch- und Trennsystem zugeführt, wobei das System ein Gehäuse, in dem das Schnittgut aufgenommen wird, und einen Rotor im Gehäuse zum Dreschen und Trennen der Körner vom Schnittgut umfasst. Der Rotor besitzt eine Rotorachse, welche durch ein Getriebe am hinteren Bereich des Rotors angetrieben wird, wobei das Getriebe eine Eingangs- und eine Ausgangswelle umfasst und letztere den Rotor antriebt. Das Getriebe ist ohnehin schwer zugänglich und ein Abscheren eines Scherstiftes als im Getriebe vorgesehene Überlastsicherung würde zur Reparatur und Instandsetzung den gesamten Ausbau des Getriebes erfordern.

Eine weitere derartige Erntemaschine ist in EP 3 501 260 A1 offenbart, worin eine Bearbeitungseinrichtung für Erntegut und ein Antriebsstrang für die wenigstens eine Bearbeitungseinrichtung beschrieben wird. Der Antriebsstrang weist eine Ausgangsgetriebestufe mit einer Abtriebswelle für die wenigstens eine Bearbeitungseinrichtung auf, wobei die Ausgangsgetriebestufe ein Eingangszahnrad und eine mit dem Eingangszahnrad und der Abtriebswelle drehfest verbundene Nutenwelle umfasst. Die Antriebsverbindung zwischen Eingangszahnrad und Abtriebswelle erfolgt über die Nutenwelle. Die Nutenwelle ist mit einer eine Sollbruchstelle vorgebenden Ringnut versehen, wobei die Ringnut in Antriebsflussrichtung zwischen dem Eingangszahnrad und der Abtriebswelle ausgebildet, und die Nutenwelle eingangszahnradseitig durch eine Montageöffnung zugänglich ist. Die Montageöffnung ist an einer den Antriebsstrang umgebenden Gehäusewand, axial zur Nutenwelle fluchtend, ausgebildet. Auch wenn hier schon eine deutliche Reduzierung eines Instandhaltungsaufwands bei Überlastung des Antriebsstranges erzielt werden konnte, gestaltet sich der Ausbau und der Austausch der Nutenwelle weiterhin als aufwändig und zeitintensiv.

Die der Erfindung zugrunde liegende Aufgabe wird darin gesehen, einen Antriebsstrang der eingangsgenannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Antriebsstrang der eingangsgenannten Art vorgesehen, wobei der erste Außenverzahnungsbereich auf einem ersten Verbindungsbereich der Hohlwelle ausgebildet ist und sich axial angrenzend zum ersten Verbindungsbereich ein Drehübertragungsbereich der Hohlwelle erstreckt. Der Drehübertragungsbereich bildet eine drehfeste Antriebsverbindung zwischen Eingangswelle und dem ersten Verbindungsbereich, wobei der erste Verbindungsbereich zwischen dem Drehübertragungsbereich und dem Außenverzahnungsbereich mit einer eine Sollbruchstelle vorgebenden ersten Aussparung versehen ist. Die Aussparung dient als Überlastsicherung und führt bei Überlastung des Antriebsstrangs zu einem gewollten Bruch im Verbindungsbereich der Hohlwelle, zwischen Außenverzahnungsbereich und Drehübertragungsbereich. Dabei kann durch entsprechende Ausbildung der Aussparung im Verbindungsbereich eine maximal zulässige Belastung festgelegt bzw. vorgegeben werden, beispielsweise durch entsprechende Form, Umfang und Tiefe der Aussparung, durch welche ein bei einer Drehmomentübertragung beanspruchter Querschnitt der Hohlwelle reduziert bzw. geschwächt wird. Bei Erreichen bzw. Überschreiten einer bestimmten Last oder eines bestimmten Drehmoments kommt es dann zum bevorzugten Sollbruch im Verbindungbereich an der Stelle der Aussparung bzw. zu einem Bruch der Hohlwelle und Abscheren des Außenverzahnungsbereichs vom Drehübertragungsbereich. Bei der Hohlwelle handelt es sich um ein konstruktiv einfaches und leicht zugängliches Bauteil, welches antriebsbezogen am Anfang des Antriebsstrangs auf der Eingangswelle gelagert ist. Damit kann im Falle einer Überlastung des Antriebsstrangs bzw. bei Bruch oder Abscheren der Hohlwelle eine anstehende notwendige Instandhaltungsmaßnahme bzw. Reparaturmaßnahme mit geringem Montage- und wenig Zeitaufwand erfolgen.

In einer bevorzugten Ausführungsform der Erfindung umfasst die Hohlwelle einen zum Antriebskegelrad antriebsfrei ausgebildeten zweiten Außenverzahnungsbereich, wobei der erste und der zweite Außenverzahnungsbereich den gleichen Modul aufweisen. Damit ist gemeint, dass die Außenverzahnungsbereiche hinsichtlich ihrer Zahnform, Zähnezahl, Teilkreisdurchmesser sowie anderer geometrischer Verzahnungsgrößen identisch ausgebildet sind. Der zweite Außenverzahnungsbereich ist auf einem zweiten Verbindungsbereich der Hohlwelle ausgebildet, welcher sich ebenfalls axial angrenzend zum Drehübertragungsbereich erstreckt, so dass sich der Drehübertragungsbereich der Hohlwelle axial zwischen dem ersten und dem zweiten Verbindungsbereichen erstreckt, wobei der Drehübertragungsbereich eine drehfeste Antriebsverbindung zwischen Eingangswelle und den beiden Verbindungsbereichen bildet. Der erste Verbindungsbereich ist zwischen dem Drehübertragungsbereich und dem ersten Außenverzahnungsbereich mit der eine Sollbruchstelle vorgebenden ersten Aussparung versehen. Der zweite Verbindungsbereich ist entsprechend zwischen dem Drehübertragungsbereich und dem zweiten Außenverzahnungsbereich mit einer eine Sollbruchstelle vorgebenden zweiten Aussparung versehen. Die Ausgestaltung eines zweiten Außenverzahnungsbereichs auf derselben Hohlwelle, sowie einer zweiten Aussparung im zweiten Verbindungsbereich ermöglicht es, im Falle einer Überlastung der Antriebseinheit bzw. bei Bruch oder Abscheren der Hohlwelle, dieselbe Hohlwelle erneut zu verwenden, indem sie axial um 180° verdreht auf die Eingangswelle montiert wird und der Antrieb über den zweiten Außenverzahnungsbereich erfolgt. Die Hohlwelle kann dadurch ein erstes und ein zweites Mal mit intaktem Überlastschutz verwendet werden. Damit kann eine Instandhaltungs- bzw. Reparaturmaßnahme auch ohne Austausch der verwendeten Hohlwelle erfolgen. Erst bei einem erneuten Überlastschaden müsste die Hohlwelle endgültig ausgetauscht und ersetzt werden. Im Erstzustand der Hohlwelle, das heißt, solange die Hohlwelle noch keinen Überlastschaden erfuhr und beide Außenverzahnungsbereiche intakt sind, ist der zweite Außenverzahnungsbereich ohne Antriebsverbindung und läuft ohne jegliche Antriebsfunktion eingriffsfrei mit.

Die Aussparung kann als Ringnut ausgebildet sein, die sich über einen Teil oder den gesamten Umfang des jeweiligen Verbindungsbereichs erstreckt. Dabei ist es denkbar, die Ringnut am Innenumfang oder am Außenumfang des Verbindungsbereichs der Hohlwelle auszubilden. In beiden Fällen erfolgt eine Reduzierung des Querschnitts des Verbindungsbereichs an dieser Stelle, was zu der erwünschten Sollbruchstelle oder Sollabscherstelle an der Hohlwelle führt. Über die Tiefe der Ringnut kann beeinflusst werden, wie stark der Querschnitt reduziert bzw. geschwächt wird und dadurch wiederum eingestellt bzw. vorgegeben werden, welche maximalen Kräfte und Drehmomente übertragbar sind, ohne dass bzw. bevor ein Bruch oder Abscheren der Hohlwelle eintritt. Sinngemäß sollte die Hohlwelle das schwächste Glied oder die schwächste Antriebskomponente im Antriebsstrang bilden, damit bei Überlast ein Schaden an weiteren teuren und schwer zugänglichen Antriebskomponenten oder auch an teuren mittels eines solchen Antriebsstrangs angetriebenen Bearbeitungseinrichtungen, beispielsweise Dreschtrommeln, Häckseltrommeln oder Schneidrotoren und dergleichen, vermieden wird.

In einer bevorzugten Ausführungsform der Erfindung kann die Hohlwelle im Drehübertragungsbereich ein Innenprofil aufweisen, welches mit einem dazu komplementären Außenprofil der Eingangswelle in Eingriff steht. Beispielsweise ist die Hohlwelle mit einem Innensechskantprofil und die Eingangswelle mit einem Außensechskantprofil versehen, wobei das Innenprofil der Hohlwelle auf dem Außenprofil der Eingangswelle gelagert und dadurch eine Drehverbindung hergestellt wird. Die Profile können vielseitig ausgebildet sein und beispielsweise an Stelle Kantprofilen auch Innen- und Außennuten oder auch Innenverzahnungen und Außenverzahnungen aufweisen, durch welche eine drehfeste Verbindung zwischen Eingangswelle und Hohlwelle erzielbar ist.

In dem ersten und/oder zweiten Verbindungsbereich der Hohlwelle ist zwischen dem Innenumfang eines jeweiligen Verbindungsbereichs und dem Außenumfang der Eingangswelle ein Umfangsspalt ausgebildet. Der Umfangsspalt dient zur Bereitstellung eines ausreichenden Spiels zwischen Verbindungsbereich und Eingangswelle. Dadurch wird gewährleistet, dass im Falle eines Überlastbruchs der Hohlwelle bzw. bei Abscheren des Verbindungsbereichs vom Drehübertragungsbereich der abgescherte Verbindungsbereich frei gegenüber der Eingangswelle drehen kann und jegliche Antriebsverbindung unterbrochen ist.

Die Hohlwelle kann durch einen axial variabel positionierbaren Anschlagring in Form eines Spannrings axial auf der Eingangswelle gesichert sein. Der Spannring sorgt für eine axiale Fixierung der Hohlwelle auf der Eingangswelle, wobei der Spannring beispielsweise als Spannring ausgebildet ist und über Spannschraube lösbar auf der Eingangswelle fixiert wird. Auf der entgegengesetzten Seite der Hohlwelle kann diese an einem am Antriebskegelrad ausgebildeten Anschlag oder auch an einem im Antriebskegelrad innenliegenden Sprengring bzw. Sicherungsring anliegen, so dass eine Fixierung der Hohlwelle auf der Eingangswelle in beide Richtungen erfolgen kann.

Der Antriebsstrang kann zudem ein Übersetzungsgetriebe umfassen, welches mit dem Abtriebskegelrad der Kegelradstufe antriebsverbunden ist. Das Übersetzungsgetriebe kann im Antriebsstrang beispielsweise als Ausgangsgetriebestufe für eine Bearbeitungseinrichtung ausgebildet sein und eine Abtriebswelle für die Bearbeitungseinrichtung umfassen. Das Übersetzungsgetriebe kann jedoch auch als Zwischengetriebe im Antriebsstrang angeordnet und als weitere Vorstufe für den Antrieb der Bearbeitungseinrichtung vorgesehen sein.

Der Antriebsstrang kann derart ausgebildet sein, dass sowohl die Hohlwelle als auch die Eingangswelle von außerhalb eines Getriebegehäuses zugänglich sind, wobei die Kegelradstufe und andere antriebsflussfolgende Antriebsstrangkomponenten in dem Getriebegehäuse untergebracht sind. Sollte es zu einer Überlastung des Antriebsstrangs kommen, dann können Instandhaltungsmaßnahmen und/oder Reparaturmaßnahmen, die eine Demontage und/oder den Ersatz der Hohlwelle erfordern, ohne aufwändige Demontage des Getriebegehäuses erfolgen.

Die oben beschriebenen Beispiele für einen Antriebsstrang können einzeln oder auch mehrfach in einem Antriebskonzept, insbesondere in einer Antriebseinrichtung konstruktiv zum Einsatz kommen. So kann eine Antriebseinrichtung eine oder mehrere Antriebsstränge umfassen, ebenso miteinander kombiniert werden, so dass beispielsweise eine Komponente eines Antriebsstrangs parallel in mehreren Antriebssträngen funktional bzw. antriebsmäßig enthalten ist.

Beispielsweise kann eine Antriebseinrichtung einen ersten und einen zweiten Antriebsstrang nach oben beschriebenen Ausführungsbeispielen umfassen, wobei die Eingangswelle als gemeinsame Eingangswelle ausgebildet ist und sowohl im ersten als auch im zweiten Antriebsstrang als Antriebskomponente zum Tragen kommt. Damit kann eine Antriebseinrichtung mit einem ersten und einem zweiten Antriebsstrang gemäß den oben beschriebenen Antriebssträngen mit ein und derselben Eingangswelle betrieben werden. Mit einer solchen Antriebseinrichtung können beispielsweise zwei Bearbeitungseinrichtungen mit jeweils einem Antriebsstrang und jeweils einer dem Antriebsstrang zugeordneten Hohlwelle als Überlastschutz parallel betrieben werden, wobei aufgrund separater Hohlwellen beide Bearbeitungseinrichtungen jeweils mit einem voneinander unabhängigen Überlastschutz ausgestattet sind.

Eine landwirtschaftliche Maschine kann beispielsweise mit einer oder mehreren Bearbeitungseinrichtungen zur Bearbeitung von Erntegut ausgestattet sein, wobei die eine oder auch jede der mehreren Bearbeitungseinrichtungen über einen Antriebsstrang gemäß den oben beschriebenen Beispielen angetrieben wird. Eine landwirtschaftliche Maschine kann insbesondere eine Antriebseinrichtung aufweisen, die einen ersten und einen zweiten Antriebsstrang gemäß den oben beschriebenen möglichen Ausführungsformen aufweist. Derartige landwirtschaftliche Maschinen können beispielsweise Mähdrescher, Maispflücker, Feldhäcksler, Mähmaschinen oder andere Arten von Erntemaschinen umfassen.

Die Landwirtschaftliche Maschine kann, wie bereits erwähnt, eine oder mehrere Bearbeitungseinrichtungen umfassen, wobei diese beispielsweise als Häckseleinrichtung, Schneideinrichtung oder Drescheinrichtung ausgebildet sein können. Es können mehrere Bearbeitungseinrichtungen parallel betrieben werden, beispielsweise zwei nebeneinander angeordnete Dreschtrommeln oder Dreschrotoren. Es kann sich anbieten, Antriebseinrichtungen mit parallel betriebenen separaten Antriebssträngen für jede Bearbeitungseinrichtung vorzusehen, oder beispielsweise auch eine Antriebseinrichtung mit nur einem Antriebsstrang vorzusehen, die mit einem Verzweigungsgetriebe zum Antrieb mehrerer Bearbeitungseinrichtungen verbunden ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische Querschnitts-Seitenansicht einer Erntemaschine in Form eines Mähdreschers mit Bearbeitungseinrichtungen und einer dafür ausgebildeten Antriebseinrichtung,
Fig. 2 eine schematische Querschnitts-Draufsicht der Erntemaschine aus Figur 1
Fig. 3 eine vergrößerte schematische Querschnittsansicht der Antriebseinrichtung für die Bearbeitungseinrichtungen aus Figur 1 und 2 mit Getriebegehäuse,
Fig. 4 eine vergrößerte schematische Draufsicht des Antriebseinrichtung aus Fig. 3 ohne Getriebegehäuse,
Fig. 5 eine vergrößerte schematische Querschnittsansicht eines Teils der Antriebseinrichtung aus Fig. 3 und
Fig. 6 eine vergrößerte schematische Querschnittsansicht einer der Hohlwellen der Antriebseinrichtung aus Figuren 1 bis 5.

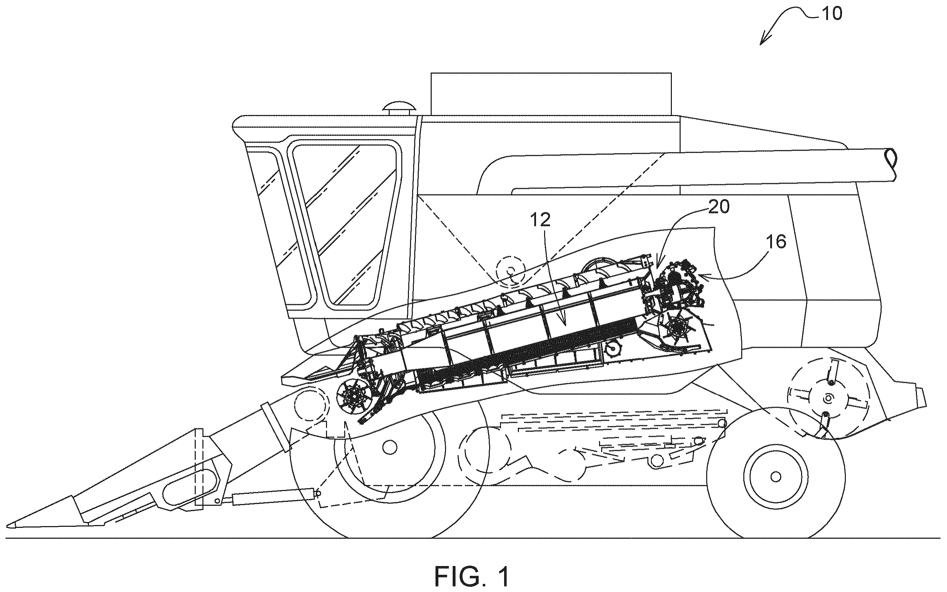

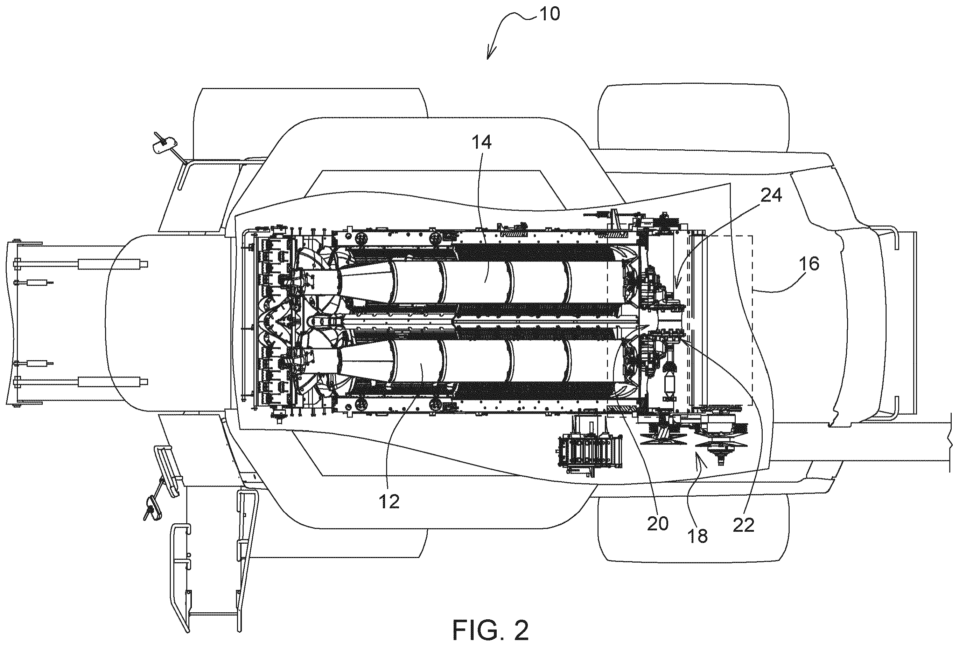

Figur 1 und Figur 2 zeigt eine selbstfahrende landwirtschaftliche Maschine 10, die beispielhaft in Form eines Mähdreschers ausgebildet ist. Denkbar ist auch, dass das im Folgenden weiter beschriebene Ausführungsbeispiel auch an einer andersartigen selbstfahrenden landwirtschaftlichen Maschine, beispielsweise einem Feldhäcksler, einer Mähmaschine oder einem Zuckerrohrernter ausgebildet sein kann.

Die landwirtschaftliche Maschine 10 weist eine erste und eine zweite Bearbeitungseinrichtung 12, 14 in Form von in Längsrichtung der landwirtschaftlichen Maschine 10 ausgerichteten Axial-Dreschrotoren auf. Die landwirtschaftliche Maschine 10 wird von einem (nur schematisch dargestellten) Verbrennungsmotor 16 angetrieben. Der Verbrennungsmotor 16 treibt einen Riementrieb 18 an, welcher wiederum eine Antriebseinrichtung 20 für die genannten Bearbeitungseinrichtungen 12, 14 antreibt. Die Antriebseinrichtung 20 umfasst einen der ersten Bearbeitungseinrichtung 12 zugeordneten ersten Antriebsstrang 22 und einen der zweiten Bearbeitungseinrichtung 14 zugeordneten zweiten Antriebsstrang 24.

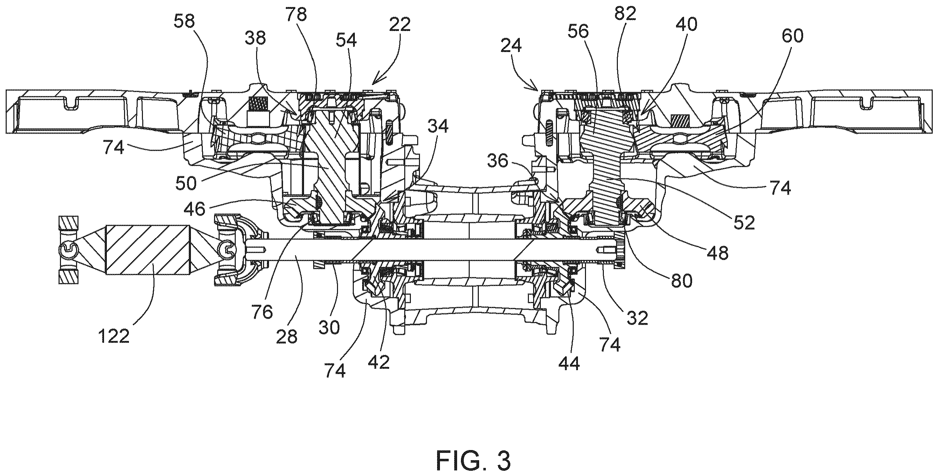

Wie genauer in den Figuren 3 bis 5 zu erkennen ist, umfassen der erste und der zweite Antriebsstrang 22, 24, neben einer gemeinsamen Eingangswelle 28, unter anderem jeweils eine Hohlwelle 30, 32, eine Kegelradstufe 34, 36 und ein Übersetzungsgetriebe 38, 40. Jede der Kegelradstufen 34, 36 umfasst ein von der jeweiligen Hohlwelle 30, 32 angetriebenes Antriebskegelrad 42, 44 sowie ein Abtriebskegelrad 46, 48. Das jeweilige Abtriebskegelrad 46, 48 steht mit dem jeweiligen Übersetzungsgetriebe 38, 40 in Antriebsverbindung, wobei in den Übersetzungsgetrieben 38, 40 jeweils ein mit dem jeweiligen Abtriebskegelrad 46, 48 über eine gemeinsame Welle 50, 52 in Verbindung stehendes Eingangszahnrad 54, 56 und ein Ausgangszahnrad 58, 60 vorgesehen ist. Das jeweilige Ausgangszahnrad 58, 60 ist mit einer die jeweilige Bearbeitungseinrichtung 12, 14 antreibenden Ausgangswelle 62, 64 verbunden.

Die Antriebskegelräder 42, 44 sind jeweils über zwei Rollenlager 66, 68 und 70, 72 an einem die Antriebseinrichtung 20 umgebendes, mehrteiliges Getriebegehäuse 74 gelagert. Die Abtriebskegelräder 46, 48 und die Eingangszahnräder 54, 56 sind auf den jeweiligen gemeinsamen Wellen 50, 52 befestigt, welche jeweils wiederum über zwei Rollenlager 76, 78 und 80, 82 am Getriebegehäuse 74 gelagert sind. Jeweils weitere zwei am Getriebegehäuse 74 gelagerte Rollenlager 84, 86 und 88, 90 sind zur Lagerung der mit den Ausgangszahnrädern 58, 60 verbundenen Ausgangswellen 62, 64 vorgesehen.

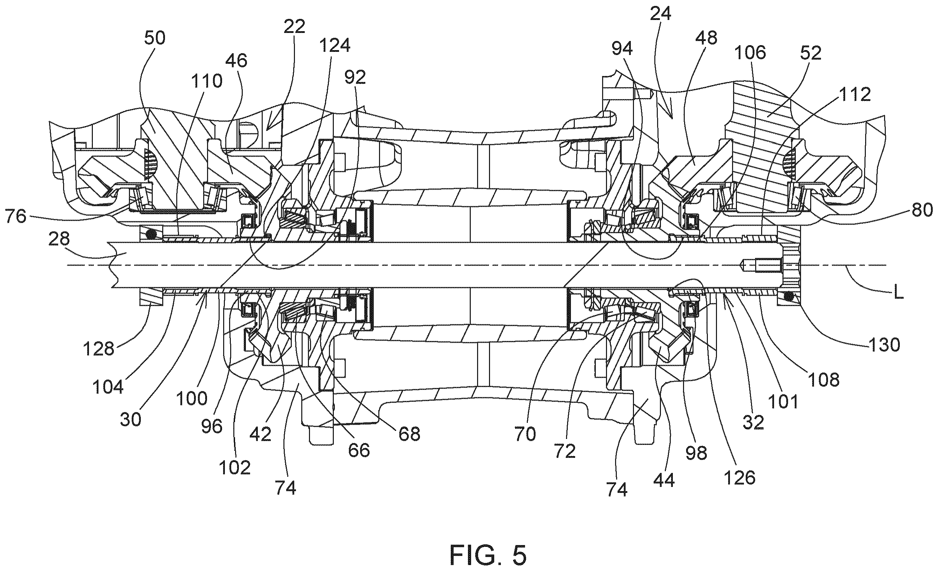

Wie in Figur 5 im Detail zu erkennen ist, sind die Antriebskegelräder 46, 48 jeweils mit einer frontseitigen Innenverzahnung 92, 94 versehen, die jeweils mit einer an den Hohlwellen 30, 32 ausgebildeten Außenverzahnung 96, 98 in Eingriff steht.

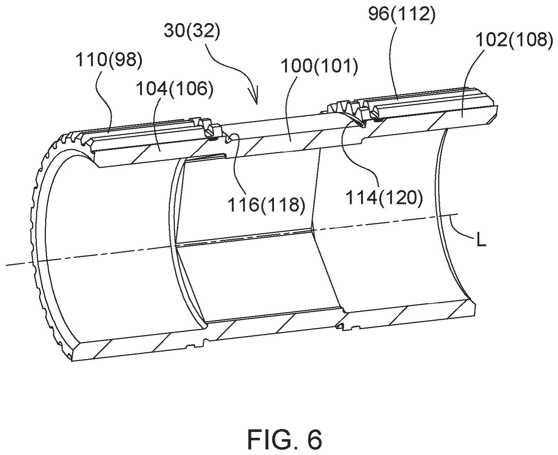

Weitere Details der baugleichen Hohlwellen 30, 32 sind Figur 6 zu entnehmen, die eine Querschnittsansicht der den Antriebssträngen 22, 24 zugeordneten Hohlwellen 30, 32 zeigt, wobei die in Klammern aufgeführten Bezugszeichen der Hohlwelle 32 des zweiten Antriebsstrangs 24 zugeordnet sind. Die Hohlwellen 30, 32 weisen jeweils einen Drehübertragungsbereich 100, 101 auf, der mit einem Innensechskantprofil ausgebildet ist. Angrenzend zum Drehübertragungsbereich 100, 101 schließen sich beidseitig in Längsrichtung L der Hohlwelle 30, 32 Verbindungsbereiche 102, 104 bzw. 106, 108 an. Auf den Verbindungsbereichen 102 und 106 sind die bereits genannten, sich im Eingriff mit den Innenverzahnungen 92, 94 der Antriebskegelräder 42, 44 befindlichen Außenverzahnungen 96 bzw. 98 ausgebildet. Jeweils eine weitere Außenverzahnung 110 und 112 ist auf den jeweils gegenüberliegenden Verbindungsbereichen 104 bzw. 108 ausgebildet, wobei die Außenverzahnungen 110 und 112 freilaufen bzw. nicht in Eingriff stehen und in der in den Figuren dargestellten Stellung und Position keinen Beitrag zu einer Antriebsübertragung leisten. Angrenzend zum Drehübertragungsbereich 100, 101 ist außenseitig auf den Verbindungsbereichen 102, 104 bzw. 106, 108 jeweils eine Aussparung in Form einer Ringnut 114, 116 und 118, 120 ausgebildet. Die Ringnuten 114, 116 und 118, 120 bewirken angrenzend zum Drehübertragungsbereich 100, 101 jeweils eine Querschnittsverminderung der Hohlwelle 30, 32, welche abhängig von einer Tiefe der jeweiligen Ringnut 114, 116 und 118, 120 größer oder kleiner ausfallen kann. Der im Bereich der jeweiligen Ringnut 114, 116 und 118, 120 verbleibende Querschnitt der Hohlwelle 30, 32 begrenzt damit ein über den Drehübertragungsbereich 100, 101 auf die Verbindungsbereiche 102, 106 bzw. 106, 108 und von dort über die Außenverzahnungen 96, 98 bzw. 110, 112 maximal übertragbares Drehmoment. Sollte ein Überlastungszustand des Antriebsstrangs 22, 24 eintreten, kommt es zu einem Bruch am kleinsten Querschnitt der Hohlwelle. Das bedeutet, dass für die in den Figuren 3 bis 5 dargestellten Antriebsstränge 22, 24 im Bereich der Ringnut 114 für den ersten Antriebsstrang 22 und im Bereich der Ringnut 118 für den zweiten Antriebsstrang 24 zu einem gewollten Hohlwellenbruch bzw. zu einem Abscheren des betroffenen Verbindungsbereichs 102 bzw. 106 eintritt, sollte ein maximal vorgegebenes Drehmoment überschritten werden. Das maximal übertragbare Drehmoment ist durch entsprechende Ausgestaltung der Ringnuten (insbesondere Tiefe) vorgebbar und so bemessen, dass die anderen im Antriebsstrang 22, 24 angeordneten Antriebskomponenten für ein das maximale Drehmoment überschreitende Last ausgelegt sind und von einem Schaden verschont bleiben. Mit anderen Worten, durch die an den Hohlwellen 30, 32 ausgebildeten Ringnuten 114, 116, 118, 120 werden Sollbruchstellen an den Hohlwellen 30,32 geschaffen, die im Falle einer Überlastung der Antriebsstränge 22, 24 den Antriebsfluss unterbrechen, ohne dass größere Schäden an anderen teureren und schwer zugänglichen Antriebskomponenten entstehen.

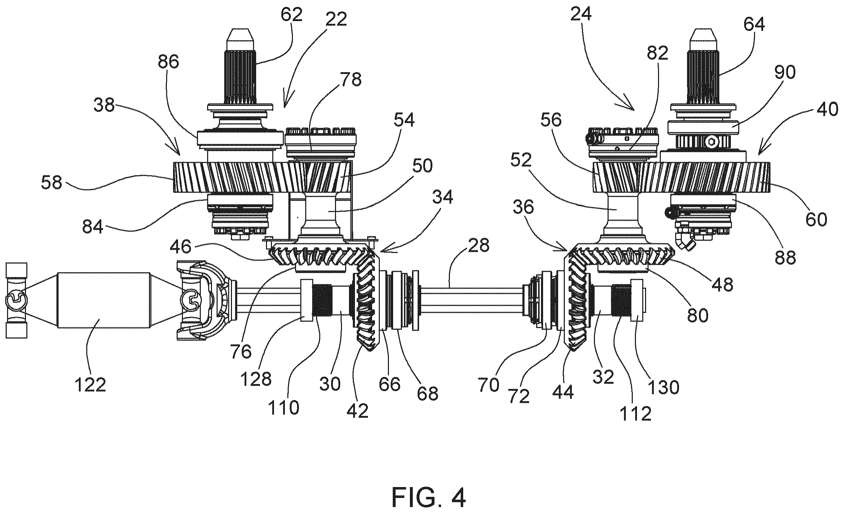

Wie in den Figuren 3 und 4 dargestellt ist, ist die Eingangswelle 28 an ein Kardangelenk 122 gekoppelt und wird über dieses angetrieben. Antriebsseitig ist das Kardangelenk 122 mit dem Riementrieb 18 verbunden. Die Eingangswelle 28 ist mit einem Außensechskantprofil (siehe Figur 4) ausgebildet und steht mit beiden Hohlwellen 30, 32 in Antriebsverbindung, wobei das Außensechskantprofil der Eingangswelle 28 mit dem Innensechskantprofil der Hohlwellen 30, 32 in Eingriff steht. Wie bereits erwähnt, stehen die Außenverzahnungen 96 und 98 mit den jeweiligen Innenverzahnungen 92 und 94 der Antriebskegelräder 42 und 44 in Antriebsverbindung, wobei die Hohlwellen 30, 32 jeweils durch einen am jeweiligen Antriebskegelrad 42, 44 ausgebildeten Anschlag 124, 126 axial in Längsrichtung (entlang der Längsachse L) in Richtung des jeweiligen Antriebskegelrads 42, 44 fixiert sind. In jeweils entgegen gesetzter Richtung zur Längsachse L sind die beiden Hohlwellen 30, 32 durch jeweils einen Spannring 128, 130 axial fixiert. Die Spannringe 128, 130 sind über Spannschrauben axial fixiert. Durch Lösen der Spannschrauben können die Spannringe 128, 130 auf der Eingangswelle 28 in axialer Richtung versetzt bzw. verschoben werden.

Wie oben bereits beschrieben, stellen die Hohlwellen 30, 32 jeweils eine Überlastsicherung dar, wobei die Hohlwelle 30 den ersten Antriebsstrang 22 und die Hohlwelle 32 den zweiten Antriebsstrang 24 absichert. Sollte folglich eine Überlastung der Antriebsstränge 22, 24 eintreten bzw. ein maximal zulässiges Antriebsmoment überschritten werden, beispielsweise bei überhöhtem Erntegutzufluss oder bei Überlastung oder Blockieren einer oder beider Bearbeitungseinrichtungen 12, 14, dann würde dies zum Bruch oder Abscheren der Hohlwelle 30, 32 des jeweils betroffenen Antriebsstrangs 22, 24 führen. Eine Reparatur oder Instandhaltungsmaßnahme für den oder die betroffenen Antriebsstränge 22, 24 kann auf besonders einfache und zeitsparende Weise erfolgen, indem die Hohlwelle 30, 32 des betroffenen Antriebsstrangs 22, 24 um 180 gedreht wird, so dass die sich bisher nicht in Antriebsverbindung befindliche Außenverzahnung 110, 112 mit der Innenverzahnung 92 bzw. 94 der Antriebskegelräder 42 und 44 in Antriebsverbindung gebracht wird. Das entsprechend abgescherte Ende einer Hohlwelle 30, 32, welches zuvor mit den Antriebskegelrädern 42, 44 in Antriebsverbindung stand, wird dabei entfernt. Insgesamt können drei Fälle unterschieden werden, bei denen wie folgt eine Reparatur bzw. Instandhaltungsmaßnahme durchgeführt wird: Eine Überlastung des ersten Antriebsstrangs 22, eine Überlastung des zweiten Antriebsstrangs 24 oder eine Überlastung beider Antriebsstränge zugleich. Das heißt, es kommt zu einem Bruch bzw. Abscheren der ersten Hohlwelle 30, der zweiten Hohlwelle 32 oder beider Hohlwellen 30,32 zugleich.

Im ersten Fall, also im Falle eines Bruchs/Abscheren der ersten Hohlwelle 30, muss in einem ersten Schritt der erste Spannring 128 gelockert bzw. von der Eingangswelle 28 gelöst werden, so dass die Eingangswelle 28 in Längsrichtung L vom Kardangelenk 122 abgekoppelt bzw. abgezogen werden kann. Die Eingangswelle 28 wird dabei so weit abgezogen, bis der Spannring 128, der Verbindungsbereich 104 der ersten Hohlwelle 30 mit der darauf ausgebildeten Außenverzahnung 110 zusammen mit dem Drehübertragungsbereich 100 der ersten Hohlwelle 30, sowie der abgebrochene/abgescherte Verbindungsbereich 102 der ersten Hohlwelle 30 mit der darauf ausgebildeten Außenverzahnung 96 von der Eingangswelle 28 frei gegeben werden. Nun kann das Entfernen des abgebrochenen/abgescherten Verbindungsbereichs 102 der ersten Hohlwelle 30 mit der darauf ausgebildeten Außenverzahnung 96 erfolgen. In einem nächsten Schritt wird der verbleibende Teil der ersten Hohlwelle 30 um 180 Grad gedreht, so dass die auf dem Verbindungsbereich 104 ausgebildete Außenverzahnung 110 mit der Innenverzahnung 92 des ersten Antriebskegelrads 42 in Eingriff gebracht wird. Es folgt das erneute Einführen der Eingangswelle in die erste Hohlwelle 30, die Montage des Spannrings 128 und das Ankoppeln der Eingangswelle 28 an das Kardangelenk 122. Nach einer Neupositionierung des Spannrings 128 mit Anschlag an die erste Hohlwelle 30, sowie einer Befestigung desselben in der neuen Position, ist der erste Antriebsstrang 22 wieder hergestellt und betriebsfähig.

Im zweiten Fall, also im Falle eines Bruchs/Abscheren der zweiten Hohlwelle 32, muss in einem ersten Schritt der zweite Spannring 130 gelockert bzw. von der Eingangswelle 28 gelöst und abgezogen werden. In einem weiteren Schritt wird der Verbindungsbereich 108 der zweiten Hohlwelle 32 mit der darauf ausgebildeten Außenverzahnung 112 und dem Drehübertragungsbereich 101 von der Eingangswelle 28 abgezogen. Nun kann das Entfernen des abgebrochenen/abgescherten Verbindungsbereichs 106 der zweiten Hohlwelle 32 mit der darauf ausgebildeten Außenverzahnung 98 erfolgen. In einem nächsten Schritt wird der verbleibende Teil der Hohlwelle 32 um 180 Grad gedreht, so dass die auf dem Verbindungsbereich 108 ausgebildete Außenverzahnung 112 mit der Innenverzahnung 94 des zweiten Antriebskegelrads 42 in Eingriff gebracht wird. Es folgt die erneute Montage des Spannrings 130 und Neupositionierung mit Anschlag an die zweite Hohlwelle 32. Nach Befestigung desselben in der neuen Position., ist der erste Antriebsstrang 24 wieder hergestellt und betriebsfähig.

Im dritten Fall, also im Falle eines Bruchs/Abscheren der ersten Hohlwelle 30 und der zweiten Hohlwelle 32, müssen die beiden zum ersten und zweiten Fall beschriebenen Reparaturschritte/Instandhaltungsmaßnahmen in beliebiger Reihenfolge durchgeführt werden.

Die beschriebene Antriebseinrichtung ermöglicht es dem Betreiber, bei einem Ausfall des oder der Antriebsstränge 22, 24 durch Überlastung, auch ohne Ersatz der Hohlwellen 30, 32 schnell und kostengünstig die Reparatur bzw. Instandhaltungsmaßnahmen durchzuführen und den Betrieb relativ zügig fortzusetzen. Erst bei einem erneuten Ausfall/Bruch/Abscheren der ersten oder zweiten Hohlwelle 30, 32 müssten diese durch eine neue erste bzw. zweite Hohlwelle 30, 32 ersetzt werden.

## Patentansprüche

1. Antriebsstrang (22, 24) für eine Antriebseinrichtung (20), umfassend eine Eingangswelle (28), eine mit der Eingangswelle (28) in Antriebsverbindung stehende Hohlwelle (30, 32) und ein mit der Hohlwelle (30, 32) in Antriebsverbindung stehende Kegelradstufe (34, 36), wobei die Kegelradstufe (34, 36) ein Antriebskegelrad (42, 44) und ein Abtriebskegelrad (46, 48) umfasst, wobei das Antriebskegelrad (42, 44) eine Radnabe mit Innenverzahnung (92, 94) aufweist, welche mit einem sich axial an der Hohlwelle (30, 32) erstreckenden ersten Außenverzahnungsbereich (96, 98) im Eingriff steht, **dadurch gekennzeichnet, dass** der erste Außenverzahnungsbereich (96, 98) auf einem ersten Verbindungsbereich (102, 106) der Hohlwelle (30, 32) ausgebildet ist und sich axial angrenzend zum ersten Verbindungsbereich (102, 106) ein Drehübertragungsbereich (100, 101) der Hohlwelle (30, 32) erstreckt, wobei der Drehübertragungsbereich (100, 101) eine drehfeste Antriebsverbindung zwischen Eingangswelle (28) und dem ersten Verbindungsbereich (102, 106) bildet und wobei der erste Verbindungsbereich (102, 106) zwischen dem Drehübertragungsbereich (100, 101) und dem Außenverzahnungsbereich (96, 98) mit einer eine Sollbruchstelle vorgebenden ersten Aussparung (114, 118) versehen ist.

2. Antriebsstrang (22, 24) nach Anspruch 1, **dadurch gekennzeichnet, dass** die Hohlwelle (30, 32) einen zum Antriebskegelrad (42, 44) antriebsfrei ausgebildeten zweiten Außenverzahnungsbereich (110, 112) umfasst, wobei der erste und der zweite Außenverzahnungsbereich (96, 98, 110, 112) den gleichen Modul aufweisen, wobei der zweite Außenverzahnungsbereich (110, 112) auf einem zweiten Verbindungsbereich (102, 104) der Hohlwelle (30, 32) ausgebildet ist, der sich axial angrenzend zum Drehübertragungsbereich (100, 101) erstreckt und wobei sich der Drehübertragungsbereich (100, 101) der Hohlwelle (30, 32) axial zwischen den ersten und den zweiten Verbindungsbereichen (102, 104, 106, 108) erstreckt, wobei der Drehübertragungsbereich (100, 101) eine drehfeste Antriebsverbindung zwischen Eingangswelle (28) und den beiden Verbindungsbereichen (102, 104, 106, 108) bildet und wobei der erste Verbindungsbereich (102, 106) zwischen dem Drehübertragungsbereich (100, 101) und dem ersten Außenverzahnungsbereich (96, 98) mit der eine Sollbruchstelle vorgebenden ersten Aussparung (114, 118) und der zweite Verbindungsbereich (104, 108) zwischen dem Drehübertragungsbereich (100, 101) und dem zweiten Außenverzahnungsbereich (110, 112) mit einer eine Sollbruchstelle vorgebenden zweiten Aussparung (118, 120) versehen ist.

3. Antriebsstrang (22, 24) nach Anspruch 1 oder 2, **dadurch gekennzeichnet, dass** die erste und/oder zweite Aussparung (114, 118, 116, 120) durch eine Ringnut ausgebildet ist.

4. Antriebsstrang (22, 24) nach einem der Ansprüche 1 bis 3, **dadurch gekennzeichnet, dass** die Hohlwelle (30, 32) im Drehübertragungsbereich (100,101) ein Innenprofil aufweist, welches mit einem dazu komplementären Außenprofil der Eingangswelle (30, 32) in Eingriff steht.

5. Antriebsstrang (22, 24) nach einem der Ansprüche 1 bis 4, **dadurch gekennzeichnet, dass** in dem ersten und/oder zweiten Verbindungsbereich (102, 106, 104, 108) der Hohlwelle (30, 32) zwischen dem Innenumfang eines jeweiligen Verbindungsbereichs (102, 106, 104, 108) und einem Außenumfang der Eingangswelle (30, 32) ein Umfangsspalt ausgebildet ist.

6. Antriebsstrang (22, 24) nach einem der Ansprüche 1 bis 5, **dadurch gekennzeichnet, dass** die Hohlwelle (30, 32) durch einen auf der Eingangswelle (28) axial variabel positionierbaren Spannring (128, 130) axial gesichert ist.

7. Antriebsstrang (22, 24) nach einem der Ansprüche 1 bis 6, ferner umfassend ein Übersetzungsgetriebe (38, 40), wobei das Abtriebskegelrad (46, 48) mit dem Übersetzungsgetriebe (38, 40) antriebsverbunden ist.

8. Antriebsstrang (22, 24) nach einem der Ansprüche 1 bis 7, wobei die Hohlwelle (30, 32) als auch die Eingangswelle (28) von außerhalb eines Getriebegehäuses (74) zugänglich sind und wobei die Kegelradstufe (34, 36) und antriebsflussfolgende Antriebsstrangkomponenten in dem Getriebegehäuse (74) untergebracht sind.

9. Antriebseinrichtung (20) mit einem oder mehreren Antriebssträngen (22, 24) nach einem der Ansprüche 1 bis 8.

10. Antriebseinrichtung (20) mit einem ersten und einem zweiten Antriebsstrang (22, 24) nach einem der Ansprüche 1 bis 8, wobei die Eingangswelle (28) als gemeinsame Eingangswelle (28) des ersten und des zweiten Antriebsstrangs (22, 24) ausgebildet ist.

11. Landwirtschaftliche Maschine (10) mit wenigstens einer Bearbeitungseinrichtung (12, 14) zur Bearbeitung von Erntegut und einem mit der wenigstens einen Bearbeitungseinrichtung (12, 14) verbundenen Antriebseinrichtung (20) nach einem der Ansprüche 9 oder 10.

12. Landwirtschaftliche Maschine (10) nach Anspruch 11, **dadurch gekennzeichnet, dass** die wenigstens eine Bearbeitungseinrichtung (12, 14) als Drescheinrichtung, Häckseleinrichtung oder Schneideinrichtung ausgebildet ist.
